# EUROPEAN PATENT APPLICATION

(11) **EP 4 542 833 A1**
(43) Date of publication of application: **23.04.2025**
(21) Application number: 22947783.1
(22) Date of filing: 23.12.2022
(51) Int. Cl.: H02K 11/33, H02K 9/19

(54) **OUTER ROTOR MOTOR**

(30) Priority: 21.06.2022 CN 202210706558
(71) Applicant: Ehang Intelligent Equipment (Guangzhou) Co., Ltd., Guangzhou, Guangdong 510000 (CN)
(72) Inventor: HU, Huazhi, Guangzhou, Guangdong 510000 (CN); JIANG, Guojun, Guangzhou, Guangdong 510000 (CN); CHEN, Tengfei, Guangzhou, Guangdong 510000 (CN); LU, Xingjie, Guangzhou, Guangdong 510000 (CN)
(74) Representative: Plavsa, Olga
(86) International application number: PCT/CN2022/141677
(87) International publication number: WO 2023/246048

(57) **Abstract**

This disclosure provides an outer rotor motor, including a motor driver cooling apparatus, a liquid-cooling system, and a stator having a cavity in the shaft part, the motor driver is at least partly arranged in the cavity, and the motor driver is arranged on the motor driver cooling apparatus. The liquid cooling system is arranged on the stator and/or the motor driver cooling apparatus, the liquid cooling system is used for cooling the stator and/or the motor driver, and the liquid cooling system at least partly extends to the outside of the motor. A beneficial effect of the present disclosure is that the liquid cooling system is arranged on an stator iron core and the motor driver cooling apparatus to cool the stator iron core and the motor driver, taking away heat generated by coil copper loss of the stator and heat generated by silicon steel sheets iron loss of the stator, and also taking away heat generated by power components of the motor driver, ensuring that the power components of the motor driver work within a controllable temperature range, and improving the heat dissipation efficiency of the motor.

## Description

### TECHNICAL FIELD

The present disclosure relates to the technical field of motor equipments, in particular to an outer rotor motor.

### BACKGROUND

Power motors used in aircraft are demanded for high power density, the heat generation of the power motors is relatively higher, which needs better cooling design, otherwise it's difficult to guarantee the service life and reliability of the motors, at present, the power motors used in the dual-manned-class electric aircraft usually adopt air-cooling type rotor motor, which has low cooling efficiency, the motor continues to work at a higher temperature, the field strength of the magnetic steels will decline, lead to the motor output power drop, endanger the flight safety.

### SUMMARY

In view of the foregoing problem, the present disclosure provides an outer rotor motor to resolve the foregoing or other problems existing in the prior art.

To resolve the foregoing problem, the present disclosure provides the following technical solutions: an outer rotor motor, which including a motor driver cooling apparatus, a liquid-cooling system, and a stator having a cavity in the shaft part; wherein
the motor driver is at least partly arranged in the cavity, the motor driver is arranged on the motor driver cooling apparatus;
the liquid-cooling system is arranged on the stator and/or the motor driver cooling apparatus, the liquid-cooling system is used for cooling the stator and/or the motor driver, and the liquid-cooling system at least partly extends to the outside of the motor.

In one or more embodiments, the liquid-cooling system includes an internal cooling apparatus, an external cooling apparatus, and a power apparatus for driving cooling medium to loop through the internal cooling apparatus and the external cooling apparatus, the internal cooling apparatus is arranged on the inside of the motor, the external cooling apparatus is arranged on the outside of the motor, the power apparatus is communicated with the internal cooling apparatus by pipes.

In one or more embodiments, the internal cooling apparatus includes a stator cooling part and a driver cooling part connected with each other, the stator cooling part is arranged on the stator for cooling the stator, the driver cooling part is arranged on the motor driver cooling apparatus for cooling the motor driver, the driver cooling part is communicated with the power apparatus, so that the cooling medium sequentially flows through the driver cooling part and the stator cooling part.

In one or more embodiments, the stator cooling part includes a plurality of first channels arranged along the axial direction of the stator and a plurality of second channels arranged along the circumferential direction of the stator, the plurality of first channels are arranged sequentially along the circumferential direction of the stator, the plurality of second channels are arranged sequentially along the circumferential direction of the stator, and the plurality of second channels are arranged at the both ends of the plurality of first channels, each second channel is communicated with the both ends of the two adjacent first channels, so that the plurality of first channels are connected to the plurality of second channels in one-by-one turn, constructing a curved channel structure.

In one or more embodiments, the stator includes a stator iron core, accommodating channels are arranged in the stator iron core for placing the stator cooling part.

In one or more embodiments, the driver cooling part is of spiral linear channel structure.

In one or more embodiments, accommodating grooves is arranged on the side surface which deviates from the motor driver of the motor driver cooling apparatus, the driver cooling part is arranged in the accommodating grooves.

In one or more embodiments, a mounting hole is arranged at the position of the motor driver cooling apparatus corresponding to the position of the stator cooling part, so that the stator cooling part can be plugged into the mounting hole.

In one or more embodiments, the external cooling apparatus includes at least one first pipe, the first pipes is of annular structure, one end of the first pipes is connected to the power apparatus, the other end of the first pipes is communicated with the internal cooling apparatus.

In one or more embodiments, the motor further includes a heat exchanger, the heat exchanger is arranged around the peripheral side of the external cooling apparatus for heat dissipation.

In one or more embodiments, the heat exchanger is an annular finned radiator.

In one or more embodiments, a through-hole is provided on the motor driver cooling apparatus to make that the cavity is communicated with the outside of the motor.

In one or more embodiments, wherein the motor further includes an air-cooling apparatus, a guide plate, and a base, the base is connected to the motor driver cooling apparatus, the guide plate is connected to the base, the air-cooling apparatus is connected to the guide plate, the air-cooling apparatus is used for air circulation of the heat exchanger.

In one or more embodiments, wherein the guide plate is arranged coaxial with the stator, and the cavity of the guide plate makes the cavity of the stator communicated with the outside of the motor, and the driving controller of the air-cooling apparatus is arranged on the motor driver.

In one or more embodiments, the air-cooling apparatus further includes a fan, and an air-cooling power apparatus for driving the fan rotating, the air-cooling power apparatus is connected to the guide plate.

In one or more embodiments, the air-cooling power apparatus is a hollow shaft outer rotor motor.

In one or more embodiments, the power apparatus is arranged on the outside of the motor, the power apparatus is pump.

In one or more embodiments, the liquid-cooling system further includes a storage apparatus for storing cooling medium, the storage apparatus is arranged on the outside of the motor, the external cooling apparatus is communicated with the storage apparatus, the power apparatus is communicated with the storage apparatus, the storage apparatus is arranged vertically, the water inlet of the storage apparatus is arranged on the top thereof, the water outlet of the storage apparatus is arranged on the bottom thereof, the storage apparatus is disposed with pressure-relief valve.

In one or more embodiments, the motor includes a plurality of temperature detecting apparatuses, each of the temperature detecting apparatuses is arranged on the coil of the stator, the water inlet and the water outlet of the liquid-cooling system, the temperature detecting apparatuses are connected to the motor driver for adjusting the rotating speed of the power apparatus and/or the air-cooling power apparatus according to the temperature of each of the temperature detecting apparatuses.

Due to the adoption of the foregoing technical solutions, the outer rotor motor has liquid-cooling system, the liquid-cooling system is arranged on the stator iron core and the motor driver cooling apparatus, for cooling the stator iron core and the motor driver, taking away heat generated by coil copper loss of the stator and heat generated by silicon steel sheets iron loss of the stator, and also taking away heat generated by power components of the motor driver, ensuring the power components of the motor drive apparatus work in the controllable temperature range, the motor heat dissipation efficiency is improved, the demands of high power density, high reliability, long life of power motor used in aircraft are supplied;

The liquid-cooling system is disposed with an external cooling apparatus outside the motor, a heat exchanger is arranged on the external cooling apparatus, which conducts heat exchange with the heat exchanger, removing the heat from the external cooling apparatus and reducing the temperature from the liquid-cooling medium, in order to be reused again; the air-cooling apparatus is also provided, the air-cooling apparatus is disposed with axial flow fan, which can drive the air flowing, implement the air flow in the air channel of heat exchanger, exchange heat with the heat exchange rapidly, the motor can be cooling rapidly under the actions of the liquid-cooling system, the heat exchanger and the air-cooling apparatus, heat dissipation efficiency of the motor is improved, the output power of the motor is ensurable;

The stator is of hollow structure in the axial part, so that the motor driver can be placed in the accommodating space formed by the stator and the motor driver cooling apparatus, the motor structure is compact and high-integrated.

### BRIEF DESCRIPTION OF DRAWINGS

The accompanying drawings illustrate examplary implementations of the present disclosure and are used with their descriptions for explaining the principles of this disclosure, where including these accompanying drawings to provide a further understanding of this disclosure, and the accompanying drawings are included in this specification and form part of this specification.
FIG. 1 is a schematic diagram of structure of an outer rotor motor according to an embodiment of the present disclosure;
FIG. 2 is a schematic diagram of structure of the front view of an outer rotor motor according to an embodiment of the present disclosure;
FIG. 3 is an A-A sectional structure schematic diagram of FIG. 2;
FIG. 4 is a B-B sectional structure schematic diagram of FIG. 2;
FIG. 5 is a C-C sectional structure schematic diagram of FIG. 2;
FIG. 6 is a schematic diagram of structure of the bottom view of an outer rotor motor according to an embodiment of the present disclosure;
FIG. 7 is a schematic diagram of structure of a liquid-cooling system according to an embodiment of the present disclosure;
FIG. 8 is a schematic diagram of structure of the front view of a liquid-cooling system according to an embodiment of the present disclosure;
FIG. 9 is a schematic diagram of structure of the top view of a liquid-cooling system according to an embodiment of the present disclosure.

In the drawings:
1, power apparatus; 2, storage apparatus; 3, heat exchanger;
4, rotor upper structure; 5, rotor mid-structure; 6, rotor lower structure;
7, air-cooling apparatus; 8, stator upper structure; 9, stator iron core;
10, motor driver; 11, motor driver cooling apparatus; 12, guide plate;
13. stator cooling part; 14, motor driver cooling part; 15 external cooling apparatus;
16, base; 130, first channels; 131, second channels.

### DESCRIPTION OF EMBODIMENTS

This disclosure will be further described in details below in combination with the accompanying drawings and embodiments. It should be understood that the specific embodiments described herein are merely used to interpret the relevant content and not to limit the scope of the present disclosure. It should also be noted that only the relevant parts of the present disclosure are shown for easy to describe.

It should be noted that, the embodiments and features in the embodiments in this disclosure may be combined in unconflicted conditions. The present disclosure will be described in details below with reference to the accompanying drawings and in conjunction with the embodiments.

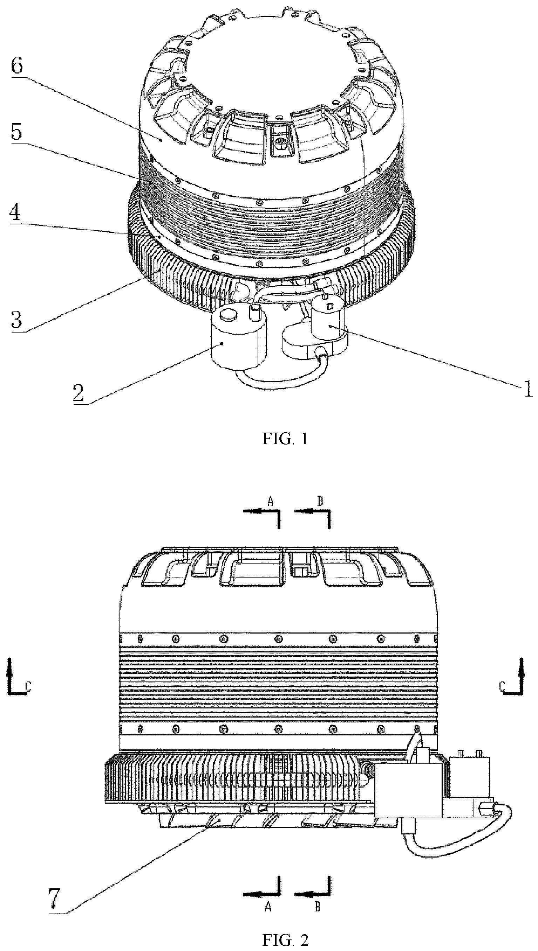

FIG. 1 shows a schematic diagram of structure according to an embodiment of this disclosure, this embodiment relates to an outer rotor motor, the outer rotor motor is disposed with a liquid-cooling system, the liquid-cooling system respectively cools the stator and the motor driver cooling apparatus, and a heat exchanger is provided, the heat exchanger and the liquid-cooling system can exchange heat with each other, transferring heat generated by coil copper loss of the stator and heat generated by silicon steel sheets iron loss of the stator to the heat exchanger, making heat dissipation, the heat dissipation efficiency is improved, the stator is of hollow shaft part structure, so that the motor driver can be placed in the hollow shaft part structure of the stator, the motor is highly integrated, the reliability of the motor is improved.

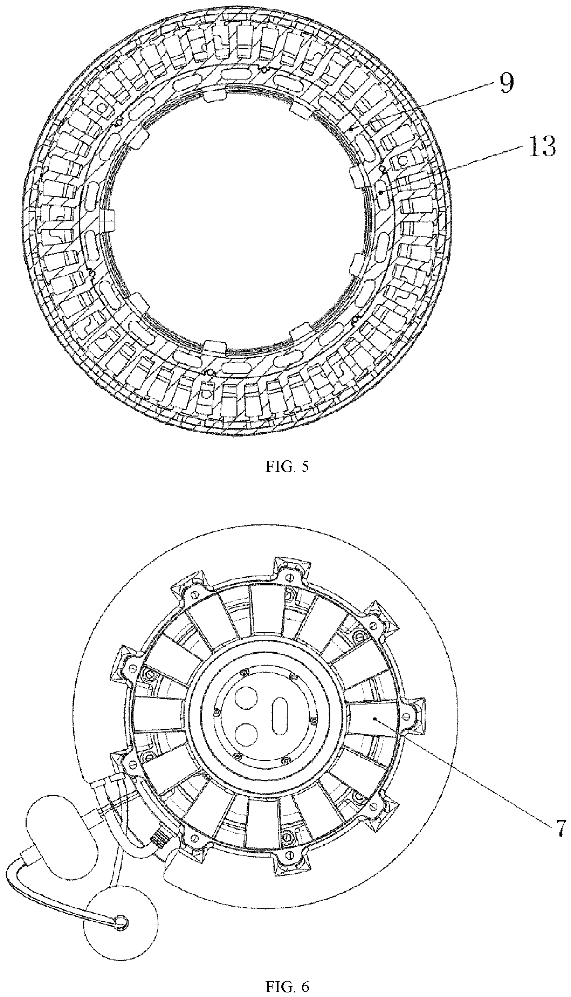

An outer rotor motor used in multi-rotor power motor, also used as fixed-wing propulsion motor, as shown in FIGS. 1-6, includes a motor driver cooling apparatus 11, a liquid-cooling system, and a stator having a cavity in the shaft part, where the motor driver 10 is at least partly arranged in the cavity, and the motor driver 10 is arranged on the motor driver cooling apparatus 11;
The liquid-cooling system is respectively arranged on the stator and/or the motor driver cooling apparatus 11, and only part of the liquid-cooling system extends to the outside of the motor, cooling the stator and/or the motor driver 10, making the heat from stator and the motor driver to be dissipated in time during the motor running, ensuring the power components of motor driver 10 work within a controllable temperature range, and heat from the stator is dissipated in time, the heat dissipation efficiency of the motor is improved, the output power of the motor is ensurable.

The motor driver 10 is at least partly arranged in the cavity, which means the motor driver 10 can be partly arranged in the cavity, or the motor driver 10 can be all arranged in the cavity, and the settings can be selected according to actual needs, no specific requirements are specified here. In one or more embodiments, the motor driver cooling apparatus 11 can be arranged at one end of the stator, since the shaft part of the stator is hollow, the motor driver cooling apparatus 11 and the stator construct a cavity for placing the motor driver 10, the motor driver 10 is arranged in the cavity, which makes the motor compact and highly integrated, and facilitates the connection line between the output end and the input end of the motor driver 10 penetrating through.

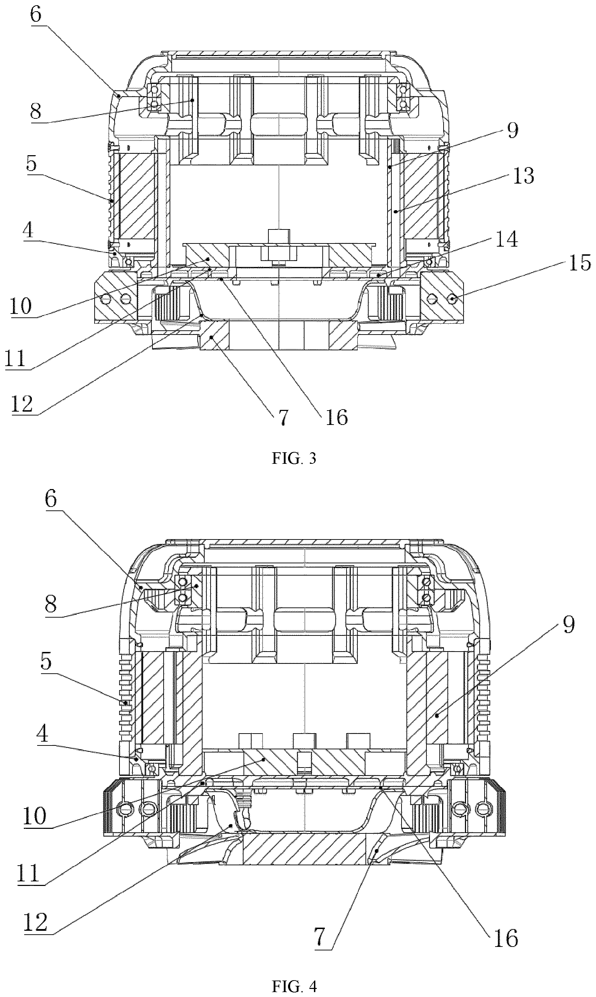

As shown in FIGS. 3 and 4, the outer rotor motor also includes a rotor, which arranged outside of the stator, the rotor and the stator are connected through a bearing to enable the rotor to rotate relative to the stator.

The foregoing stator includes the stator iron core 9 and the stator upper structure 8, the stator upper structure 8 is removably connected to one end of the stator iron core 9, the stator iron core 9 is arranged coaxial with the stator upper structure 8, both the stator iron core 9 and the stator upper structure 8 are of hollow structure in the axial part, that is, both the stator iron core the stator iron core 9 and the stator upper structure 8 are annular structure, the two ends are communicated with the outside, the accommodating space is arranged in the middle part and is communicated with the two ends, forms the hollow shaft structure, makes a cavity provided in the shaft part of the stator, and the motor driver can be placed in the cavity, the size of the motor is reduced, the structure of the motor is compact.
In one or more embodiments, the motor driver cooling apparatus 11 and the stator upper structure 8 are respectively located at the two ends of the stator iron core 9, connected by means of bolts or other connectors; the foregoing rotor includes the rotor upper structure 8, the rotor mid-structure 5, and the rotor lower structure 4, the rotor upper structure 6, the rotor mid-structure 5 and the rotor lower structure 4 are sequentially removably connected, it can be connected by means of connectors such as bolts;
the rotor upper structure 6 is corresponding to the position of the stator upper structure 8, a main bearing is provided between the rotor upper structure 6 and the stator upper structure 8, so that the rotor upper structure 6 can rotate relative to the stator upper structure 8, the main bearing can be a double-column angle contact thin-wall bearing, mounted in a back-to-back manner, be able to withstand the thrust or pulling force generated by the motor load propeller, a stator retaining ring is provided on the stator upper structure 8 at the position corresponding to the main bearing, a rotor retaining ring is provided on the rotor upper structure 8 at the position corresponding to the main bearing, the stator retaining ring and the rotor retaining ring respectively position the main bearing on the axial direction, meanwhile, positioning parts are provided on both the rotor upper structure 6 and the stator upper structure 8, for positioning the man bearing on the axial direction, making the main bearing to be stably mounted between the rotor upper structure 6 and the stator upper structure 8, to withstand the pulling force or thrust, and to enable the rotor upper structure 6 to rotate relative to the stator upper structure 8;
the rotor lower structure 4 is corresponding to the position of the stator iron core 9 near one end of the motor drive cooling apparatus 11, a vice bearing is provided between the rotor lower structure 4 and the stator iron core 9, for enabling the rotor lower structure 4 to rotate relative to the stator iron core 9, the vice bearing can be a deep groove ball thin-wall bearing, for supporting the rotor lower structure 4, preventing the rotor from overturning. In order to position the vice bearing and reduce the force applied to the stator iron core 9, the vice bearing is arranged between the rotor lower structure 4 and the motor driver cooling apparatus 11, a bulge is disposed on the motor driver cooling apparatus 11, the vice bearing is arranged in the space between the bulge and the rotor substructure 4. The rotor upper structure 6 is able to rotate relative to the stator upper structure 8 under the action of the main bearing, the rotor lower structure 4 is able to rotate relative to the motor drive cooling apparatus 11 under the action of the vice bearing, the rotor mid-structure 5 is able to rotate under the action of the rotor upper structure 6 and the rotor substructure 4, to implement the rotor rotate relative to the stator and form the overall structure of the outer rotor.

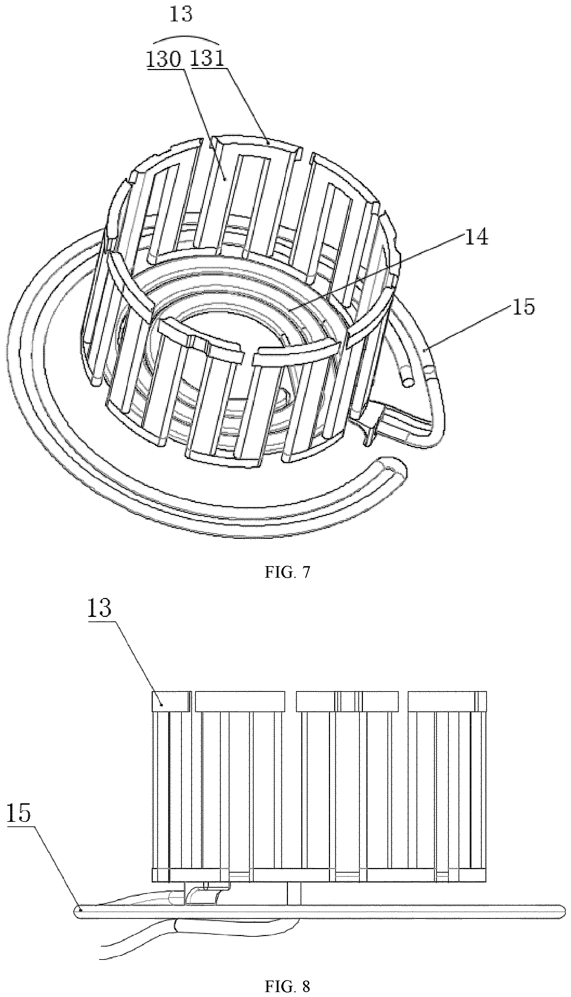

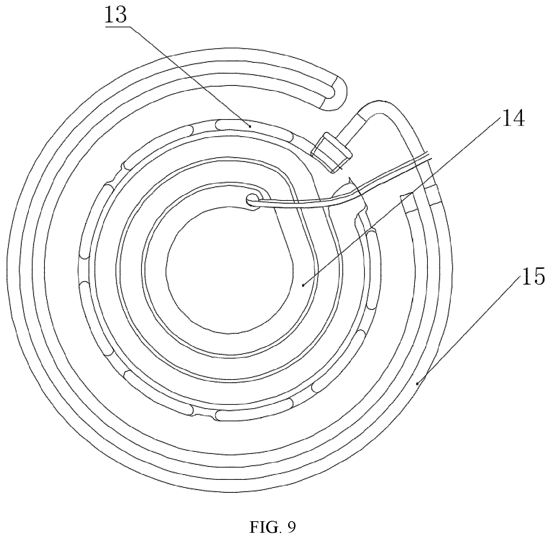

As shown in FIGS. 7-9, the foregoing liquid-cooling system includes an internal cooling apparatus, an external cooling apparatus 15, and a power apparatus 1 for circulating cooling medium through the internal cooling apparatus and the external cooling apparatus 15. The internal cooling apparatus is located inside the motor, the external cooling apparatus 15 is located outside the motor, and the power apparatus 1 is communicated with the internal cooling apparatus by pipes. The internal cooling apparatus is communicated with the external cooling apparatus 15, the external cooling apparatus 15 is communicated with the power apparatus 1, so that under the action of the power apparatus, the cooling medium sequentially flows into the internal cooling apparatus and the external cooling apparatus 15, and flows out of the external cooling apparatus 15, forms the cooling medium loop, the cooling medium flows through the internal cooling apparatus and the external cooling apparatus under the action of the power apparatus 1, conducts heat exchange, removes the heat generated by the motor, the heat dissipation efficiency of the motor is improved. In one or more embodiments, the cooling medium can be water.

The foregoing internal cooling apparatus is arranged inside the motor for cooling the inside of the motor, the internal cooling apparatus includes the stator cooling part 13 and the driver cooling part 14. The stator cooling part 13 is communicated with the driver cooling part 14. The stator cooling part 13 is arranged on the stator for cooling the stator, the driver cooling part 14 is arranged on the motor driver cooling apparatus 11 for cooling the motor driver 10.

Specifically, the stator cooling part 13 is arranged on the stator iron core 9 for cooling the stator iron core 9, taking away heat generated by winding coil copper loss of the stator iron core 9 and heat generated by silicon steel sheets iron loss of the stator iron core 9, the stator cooling part 13 can be located on the side surface which not locates stator slot of the stator iron core 9 (located on the inner side surface of the accommodating space), or, the stator cooling part 13 can be arranged inside the stator iron core 9, located between the stator slot and the inner side surface of the stator iron 9, or other settings can be selected according to actual needs, no specific requirements are specified here.

In order to cool down the stator iron core 9 rapidly, In one or more embodiments, as shown in FIGS. 3, 4 and 7, the stator iron core 9 of the stator is provided with a plurality of accommodating channels, the stator cooling part 13 is arranged inside of the stator iron core 9, the plurality of accommodating channels are sequentially arranged along the circumferential direction of the stator iron core 9, and the plurality of accommodating channels are divided into two intercommunicated groups, the accommodating channels in one of the groups are arranged along the axial direction of the stator iron core 9, and the other group of accommodating channels are arranged at the end which is away from the connection with the motor driver cooling apparatus 11 of the stator iron core 9, and this group of accommodating channels are arranged along the circumferential direction of the stator iron core 9, so that the stator cooling part 13 is located in the accommodating channels, for cooling the stator iron core 9. the stator iron core 9 is of hollow structure having a plurality of accommodating channels, so that the stator cooling part 13 is mounted in the accommodating channels, a group of accommodating channels are located inside the stator iron core 9, this group of accommodating channels are all arranged along the axial direction of the stator iron core 9, and the plurality of accommodating channels in this group are arranged sequentially along the circumferential direction of the stator iron core 9, the plurality of accommodating channels in this group can be all arranged parallel with the axis of the stator iron core 9, Then the group of accommodating channels are through-hole structures penetrating the stator iron core 9, the plurality of accommodating channels in the other group are sequentially arranged along the circumferential direction of the stator iron core 9, each channel in this group is arranged along the circumferential direction of the stator iron core 9, this group of accommodating channels can be located at one end of the stator iron core 9 or at the both ends of the stator iron core 9, or other settings can be selected according to actual needs, no specific requirements are specified here, this group of accommodating channels are of grooves structure, which formed by a side surface which faces to the stator slot of the stator iron core 9 indenting inward.

The foregoing stator cooling part 13 includes a plurality of first channels 130 arranged along the axis direction of the stator and a plurality of second channels 131 arranged along the circumferential direction of the stator, the plurality of first channels 130 are arranged sequentially on the circumferential direction of the stator, the plurality of second channels 131 are arranged sequentially on the circumferential direction of the stator, the second channels 131 are arranged at both ends of the first channels 130, each second channel 131 is communicated with the two adjacent first channels 130, so that the plurality of first channels 130 are connected with the second channels 131 in one-by-one turn, to construct a curved channel structure, when the connection of the first channels 130 and the second channels 131 is implemented, one end of a first channel 130 is connected to one end of a second channel 131, the other end of the second channel 131 is connected to another first channel 130, the other end of this first channel 130 is connected to one end of another second channel 131, ......, with arranged sequentially, a channel structure of curve axis shape is constructed, forming the structure of the stator cooling part 13, the two ends of the stator cooling part 13 are respectively a water inlet and a water outlet. In one or more embodiments, the plurality of first channels 130 are all arranged parallel to the axis of the stator, the first channels 130 are arranged in a group of accommodating channels which arranged along the axial direction of the stator core 9, the shape of this group of accommodating channels are adaptable to the shape of the first channels 130, making the first channels 130 fit well with the accommodating channels, the second channels 131 are arranged in the other group of accommodating channels which arranged along the circumferential direction of the stator iron core 9, the shape of this group of accommodating channels are adaptable to the shape of the second channels 131, making the second channels 131 fit well with the accommodating channels, for heat transfer. The first channels 130 and the second channels 131 form a structure of the stator cooling part 13 in an up and down repeating manner, with a large contact area with the stator iron core 9, good turbulence effect and high heat exchange efficiency.

The foregoing driver cooling part 14 is of channel structure with spiral configuration, the driver cooling part 14 is a spiral channel structure, and one end of the driver cooling part 14 is communicated with the water inlet of the stator cooling part 13 to loop the cooling medium. The spiral channel structure makes the contact area between the driver cooling part 14 and the motor driver cooling apparatus 11 large, correspondingly makes the contact area between the cooling medium and the motor driver cooling apparatus 11 large, in order to facilitates the heat generated by the heat-generating components in the motor driver 10 conducting out.

As shown in FIGS. 3 and 4, accommodating grooves are arranged on the side surface which deviates from the motor drive 10 of the motor driver cooling apparatus 11, the driver cooling part 14 is arranged in the accommodating grooves, which is of consistent shape with the driver cooling part 14, in order to facilitate the driver cooling part 14 fitting well with the accommodating groove and conducting heat exchange. The motor drive cooling apparatus 11 is of plate structure, The motor driver 10 is fixedly mounted on a side surface facing the accommodating space of the motor driver cooling apparatus 11, the power components of the motor driver 10 are mounted on this side surface of the motor drive cooling apparatus 11, and a through-hole is provided on the motor drive cooling apparatus 11, so that the accommodating space is communicated with the outside of the motor, so that the input end of the motor driver 10 is connected to other apparatuses outside the motor through the through hole, the input end of the motor driver 10 is a connector of two power lines (positive and negative poles) and a signal bus, the output end of the motor driver 10 is the three motor phase line terminal base, the three motor phase lines are connected to the motor driver 10 from the upper part of the accommodating space.

Accommodating grooves are provided on the other side surface of the motor driver cooling apparatus 11, the accommodating grooves are arranged along the circumferential direction of the through-hole, meanwhile, a mounting hole is arranged on the position of the motor driver cooling apparatus 11 corresponding to the position of the stator cooling unit 13, so that the stator cooling part 13 can be plugged into the mounting hole, the mounting hole is arranged outside the accommodating grooves, the motor driver cooling apparatus 11 is fixedly connected with the stator iron core 9 by means of connectors such as bolts.

The foregoing external cooling apparatus 15 is arranged outside of the motor, according to this embodiment, at the lower part of the stator core 9 (one end near the motor driver cooling apparatus 11 outside the motor), the external cooling apparatus 15 includes at least one first pipe which is of annular structure, one end of the first pipe is communicated with the power apparatus 1, the other end of the first pipe is communicated with the internal cooling apparatus for the cooling medium flowing. In order to increase the length of the flow path of the cooling medium, conduct the heating dissipation, In one or more embodiments, the number of the first pipe can be two, and both the two first pipes are disposed of annular shape, wherein, one end of the first pipe is connected with one end of the second first pipe, the other end of the first pipe is connected with the storage apparatus 2, and the other end of the second first pipe is connected with the internal cooling apparatus, i.e. this end of the second first pipe is communicated with the water outlet of the stator cooling part 13. The two first lines are fixedly connected with each other, in one or more embodiments, can be integrated molding, so that the external cooling apparatus 15 is of double-channel annular structure.

In one or more embodiments, the stator cooling part 13 and the driver cooling part 14 can be arranged coaxial with the external cooling apparatus 15.

The foregoing power apparatus 1 is located outside the rotor of the motor for easy maintenance. The power apparatus 1 is a pump that supplies power for the cooling medium loop, it can be selected from a centrifugal water pump, a gear water pump, or other type of water pump according to actual needs, the water outlet of the power apparatus 1 is communicated with the water inlet of the driver cooling part 14 through connection pipe, the water outlet of the driver cooling part 14 is communicated with the water inlet of the stator cooling part 13. The pump is located at the inlet of the driver cooling part 14, where the cooling medium temperature is low, the service life of the pump is prolonged.

The foregoing liquid-cooling system further includes a storage apparatus 2, the storage apparatus 2 is connected to the external cooling apparatus 15, the storage apparatus 2 is communicated with the power apparatus 1, The foregoing storage apparatus 2 is arranged outside of the motor, the storage apparatus 2 is used for storing cooling medium, the storage apparatus 2 is arranged vertically, the water inlet of the storage apparatus 2 is arranged on the top of the storage apparatus 2, the water outlet is arranged on the bottom of the storage apparatus 2, the storage apparatus 2 is disposed with a pressure-relief valve, in one or more embodiments, the storage apparatus 2 can be a water tank, the inlet of the water tank is communicated with the outlet of the external cooling apparatus 15, the water outlet of the water tank is communicated with the power apparatus 1 through pipes, forming the cooling medium flowing loop pipes structure of the liquid-cooling system. In the setting of the pressure-relief valve, when the temperature of the cooling medium inside the storage apparatus 2 is too high or even boiling, the pressure in the loop pipes of the cooling medium can be released through the pressure-relief valve, so as to avoid the leakage of each joint node in the cooling medium circulation pipes.

During the liquid-cooling system cooling the motor, the flow direction sequence of the cooling medium is: the cooling medium flows out of the storage apparatus 2, into the driver cooling part 14 through the power apparatus 1, exchanges heat with the motor driver cooling apparatus 11, then flows into the stator cooling part 13, exchanges heat with the stator iron core 9, then flows into the external cooling apparatus 15, exchanges heat with the air, then flows into the storage apparatus 2, and then loops again, to sequentially cool the motor driver cooling apparatus 11 (i. e. motor driver 10) and the stator core 9, cooling down the motor driver 10 firstly ensures that the power components of the motor driver 10 to work within a controllable temperature range.

In one or more embodiments, as shown in FIGS. 1-6, in order to enable the external cooling apparatus 15 cooling rapidly and exchanging heat rapidly, the motor further includes an air-cooling apparatus 7, a guide plate 12, and a base 16, the base 16 is connected to the motor driver cooling apparatus 11, the guide plate 12 is connected to the base 16, and the air-cooling apparatus 7 is connected to the guide plate 12.

The base 16 is provided to facilitates the mountain of the guide plate 12 and the air-cooling apparatus 7. The base 16 is of annular structure, and the base 16 is fixedly connected with the motor driver cooling apparatus 11 by means of bolts or other fasteners, the diameter of the base 16 is greater than the diameter of the drive cooling part 14, so that the base 16 is not in contact with the driver cooling part 14 when connected with the motor drive cooling apparatus 11, and not cause interference.

The base 16 includes a first connection part and a second connection part, the first connection part is fixedly connected with the second connection part, the first connection part is of plate structure, the first connection part is fixedly connected to the motor driver cooling apparatus 11, and a first through hole is provided on the first connection part, the first through hole is arranged coaxial with the through-hole on the motor drive cooling apparatus 11, the diameter of the first through hole is not greater than the diameter of the through-hole, so that the first connection part can blocks the accommodating grooves on the motor drive cooling apparatus 11, to make the accommodating grooves roughly forming a hole structure, so that the driver cooling part 14 does not fall off from the accommodating grooves when mounted in the accommodating grooves, the first connection part supports the drive cooling unit 14; the second connection part is of annular structure, fixedly mounted around the peripheral side of the end of the first connection part, and the second connection part is located in a side which is not connected to the motor driver cooling apparatus 11 of the first connection part. The first connection part is fixedly connected to the second connection part, which can be integrated molding. Meanwhile, a plurality of openings are provided on the second connection section for convenience of the connection pipes penetrating through as well as the air circulation, the external cooling apparatus 15 is arranged around the outside of the second connection part, to exchange heat through the air circulation, to conduct heat away.

The guide plate 12 is arranged coaxial with the stator, and the cavity of the guide plate 12 communicates the cavity of the stator with the outside of the motor, i. e., the guide plate 12 is respectively communicated with the accommodating space and the outside of the motor, the driving controller of the air-cooling apparatus 7 is arranged on the motor driver 10. The guide plate 12 is provided to guide the air flowing generated by the air-cooling apparatus 7, and the guide plate 12 is fixedly connected with the first connection part and is located inside of the second connection part. The guide plate 12 is of annular structure, the diameter of the end connected to the base 16 of the guide plate 12 is greater than the diameter of the other end, which makes the guide plate 12 forming a rough cone shape. for convenience of the pipes connected between the power apparatus 1 and the storage apparatus 2 being connected with the internal cooling apparatus and the external cooling apparatus 15, a plurality of openings are disposed on the guide plate 12, so that the connecting pipes can penetrate through.

The air-cooling apparatus 7 also includes a fan, and an air-cooling power apparatus for driving the fan rotating, the air-cooling power apparatus is connected to the guide plate 12, the fan is connected to the air-cooling power apparatus which drives the fan to rotate, the air-cooling power apparatus is an outer rotor hollow shaft motor, the stator of the outer rotor hollow shaft motor is fixedly connected to the guide plate 12, and the fan is connected to the rotor so that the fan can rotate relative to the guide plate 12.

Meanwhile, the drive circuit of the air-cooling power apparatus is arranged on the motor driver 10, which makes the outer rotor motor being highly integrated, and the outer rotor hollow shaft motor is selected to facilitate the cable of the motor to provide a line channel, so that the motor can be connected to the motor driver 10. The rotation of the fan can drive air flowing and exchanging heat with the external cooling apparatus 15. The fan is arranged coaxial with the guide plate 12, and is an axial flow fan.

The motor also includes a heat exchanger 3 which is connected to the base 16, and the heat exchanger 3 is arranged around the peripheral side of the external cooling apparatus 15 for heat dissipation. The heat exchanger 3 is fixedly mounted on the second connection part, and the heat exchanger 3 is located outside the second connection part, the external cooling apparatus 15 is located inside the heat exchanger 3, the external cooling apparatus 15 is contacted with the external heat exchanger 3, the heat exchanger 3 is an annular finned heat radiator exchanging heat with the external cooling apparatus 15, the external cooling apparatus 15 is back and forth repeating pipes, which is beneficial to improve the temperature uniformity of the heat exchanger 3 and improve the heat dissipation efficiency.

When the outer rotor motor is used as a torque motor, the air channel of the heat exchanger 3 radiates the heat of the finned radiator from the outer side to the inner side in a annular manner, and then flows out to the rear of the motor through the guide plate 12, and the axial flow fan is arranged in the air channel to supply power for the air flowing; when the outer rotor motor is used as the thrust motor, the air channel of the heat exchanger is on the contrary, the axial fan blows the air from the rear to the heat exchanger 3, and then blows through the heat exchanger 3 from the inner side to the outer side in an annular manner for the heat dissipation of the finned radiator.

The outer rotor motor also includes a plurality of temperature detecting apparatuses, each temperature detecting apparatus is respectively arranged on the coil of the stator, the water inlet and the water outlet of the liquid-cooling system, the temperature detecting apparatuses are connected to the motor driver 10 for monitoring the temperature of the coil, the water inlet and the water outlet of the liquid cooling system, the motor driver 10 is used for adjusting the rotating speed of the power apparatus and/or the air-cooling power apparatus according to the temperature of the respective temperature detecting apparatus. The temperature detecting apparatuses can be temperature sensors.

The speed of foregoing power apparatus 1 and the air-cooling power apparatus can be adjusted, both the power apparatus 1 and the air-cooling power apparatus are connected to the motor driver 10, and the rotating speed of both the power apparatus 1 and the air-cooling power apparatus can be adjusted according to the temperature of the coil, the water inlet and the water outlet of the liquid-cooling system, so as to control the heat dissipation power.

While the outer rotor motor is working, power apparatus 1 acts, makes the cooling medium in the storage apparatus 2 flowing out and enter the driver cooling part 14, and flowing in the driver cooling part 14 in a spiral-linear manner, cooling the motor driver cooling apparatus 11, furthermore cooling the motor driver 10, then cooling medium then enters into the stator cooling part 13, and flows up and down repeatedly in the stator cooling part 13, to cool down the stator iron core 9, the cooling medium which flowed out from the stator cooling part 13 enters into the external cooling apparatus 15, and flows back and forth repeatedly in the external cooling apparatus 15, conducts heat exchange with the heat exchanger 3, to lower the temperature, The cooling medium which flowed out from the external cooling apparatus 15 enters into the storage apparatus 2, in order to proceed the next loop; during this process, the air-cooling apparatus 7 acts, the fan rotates, according to the way the motor working, controls the air channel of the heat exchanger 3, radiates heat for the heat exchanger 3, the heat dissipation efficiency is improved; the temperature detecting apparatuses monitor the temperature of the cooling medium in the coil, the water inlet and the water outlet of the liquid-cooling system, to control the rotating speed of the power apparatus 1 and the air-cooling power apparatus, to control the heat dissipation efficiency.

Due to the adoption of the foregoing technical solutions, the outer rotor motor has a liquid-cooling system, the liquid-cooling system is arranged on the stator iron core and the motor drive cooling apparatus, for cooling the stator iron core and the motor driver, taking away heat generated by coil copper loss of the stator and heat generated by silicon steel sheets iron loss of the stator, and also taking away heat generated by power components of the motor driver, ensuring that the power components of the motor driver work within a controllable temperature range, the heat dissipation efficiency of the motor is improved, the demands of high power density, high reliability and long life of the power motors used in aircraft are supplied; the liquid-cooling system is disposed with external cooling apparatuses on the outside of the motor, the heat exchanger is arranged on the external cooling part, the external cooling part proceeds heat exchange with the heat exchanger, takes away the heat from the external cooling part, reduces the temperature of the cooling medium flowing out from the liquid-cooling system, in order to be reused again; an air-cooling apparatus is also provided, the air-cooling apparatus has an axial flow fan, which can drive the air flowing, implement the air flowing in the air channel of the heat exchanger, exchange heat rapidly with the heat exchanger, the motor can be cooling rapidly under the actions of the liquid-cooling system, the heat exchanger and the air cooling apparatus, the heat dissipation efficiency of the motor is improved, the output power of the motor is ensurable; the stator is of hollow structure in the axial part, so that the motor driver can be placed in the accommodating space formed by the stator and the motor drive cooling apparatus, the motor structure is compact and highly integrated.

A person of ordinary skill in the art should understand that the foregoing implementations are merely intended to clearly describe this disclosure, and not to limit the scope of the disclosure. For a person of ordinary skill in the art, other changes or variations may be made from the foregoing disclosure, and they are still within the scope of the present disclosure.

## Claims

1. An outer rotor motor, wherein comprising:
a motor driver cooling apparatus;
a liquid-cooling system, and
a stator having a cavity in the shaft part, wherein
the motor driver is at least partly arranged in the cavity, the motor driver is arranged on the motor driver cooling apparatus;
the liquid-cooling system is arranged on the stator and/or the motor driver cooling apparatus, the liquid-cooling system is used for cooling the stator and/or the motor driver, and the liquid-cooling system at least partly extends to the outside of the motor.

2. The outer rotor motor according to claim 1, wherein the liquid-cooling system comprises:
an internal cooling apparatus,
an external cooling apparatus, and
a power apparatus for driving cooling medium to loop through the internal cooling apparatus and the external cooling apparatus,
the internal cooling apparatus is arranged inside the motor, the external cooling apparatus is arranged outside of the motor,
the power apparatus is communicated with the internal cooling apparatus by pipes.

3. The outer rotor motor according to claim 2, wherein the internal cooling apparatus comprises:
a stator cooling part and a driver cooling part which are communicated with each other, the stator cooling part is arranged on the stator for cooling the stator, the driver cooling part is arranged on the motor driver cooling apparatus for cooling the motor driver, the driver cooling part is communicated with the power apparatus, so that the cooling medium sequentially flows through the driver cooling part and the stator cooling part.

4. The outer rotor motor according to claim 3, wherein the stator cooling part comprises:
a plurality of first channels arranged along the axial direction of the stator and
a plurality of second channels arranged along the circumferential direction of the stator, the plurality of first channels are arranged sequentially along the circumferential direction of the stator, the plurality of second channels are arranged sequentially along the circumferential direction of the stator, and the plurality of second channels are arranged at the both ends of the plurality of first channels, each second channel is communicated with the both ends of the two adjacent first channels, so that the plurality of first channels are connected to the plurality of second channels in one-by-one turn, constructing a curved channel structure.

5. The outer rotor motor according to claim 4, wherein the stator comprises a stator core, accommodating channels are arranged in the stator iron core for placing the stator cooling part.

6. The outer rotor motor according to claims 3 or 4 or 5, wherein the driver cooling part is of spiral linear channel structure.

7. The outer rotor motor according to claim 6, wherein accommodating grooves are arranged on the side surface which deviates from the motor driver of the motor driver cooling apparatus, the driver cooling part is arranged in the accommodating grooves.

8. The outer rotor motor according to claim 7, wherein a mounting hole is arranged at the position of the motor driver cooling apparatus corresponding to the position of the stator cooling part, so that the stator cooling part can be plugged into the mounting hole.

9. The outer rotor motor according to any one of claims 2 to 5 and 7 to 8, wherein the external cooling apparatus comprises at least one first pipe, the first pipe is of annular structure, one end of the first pipe is communicated with the power apparatus, the other end of the first pipe is communicated with the internal cooling apparatus.

10. The outer rotor motor according to any one of claims 2 to 5 and 7 to 8, wherein the motor further comprises a heat exchanger, the heat exchanger is arranged around the peripheral side of the external cooling apparatus for heat dissipation.

11. The outer rotor motor according to claim 10, wherein the heat exchanger is an annular finned radiator.

12. The outer rotor motor according to any one of claims 1-5, 7-8 and 11, wherein a through-hole is provided on the motor driver cooling apparatus, which makes the cavity is communicated with the outside of the motor.

13. The outer rotor motor of claim 10, wherein the motor further comprises an air-cooling apparatus, a guide plate, and a base, the base is connected to the motor driver cooling apparatus, the guide plate is connected to the base, the air-cooling apparatus is connected to the guide plate, the air-cooling apparatus is used for air circulation of the heat exchanger.

14. The outer rotor motor according to claim 13, wherein the guide plate is arranged coaxial with the stator, and the cavity of the guide plate makes the cavity of the stator communicated with the outside of the motor, and the driving controller of the air-cooling apparatus is arranged on the motor driver.

15. The outer rotor motor of claim 14, wherein the air-cooling apparatus further comprises a fan, and an air-cooling power apparatus for driving the fan rotating, the air-cooling power apparatus is connected to the guide plate.

16. The outer rotor motor according to claim 15, wherein the air-cooling power apparatus is a hollow shaft outer rotor motor.

17. The outer rotor motor according to claim 2, wherein the power apparatus is arranged on the outside of the motor, the power apparatus is a pump.

18. The outer rotor motor of claim 17, wherein the liquid-cooling system further comprises a storage apparatus for storing cooling medium, the storage apparatus is arranged on the outside of the motor, the external cooling apparatus is communicated with the storage apparatus, the power apparatus is communicated with the storage apparatus, the storage apparatus is arranged vertically, the water inlet of the storage apparatus is arranged on the top thereof, the water outlet of the storage apparatus is arranged on the bottom thereof, the storage apparatus is disposed with pressure-relief valve.

19. The outer rotor motor according to any one of claims 13-16, wherein the motor further comprises a plurality of temperature detecting apparatuses, each of the temperature detecting apparatuses is arranged on the coil of the stator, the water inlet and the water outlet of the liquid-cooling system, the temperature detecting apparatuses are connected to the motor driver for adjusting the rotating speed of the power apparatus and/or the air-cooling power apparatus according to the temperature of each of the temperature detecting apparatuses.
